# EUROPEAN PATENT SPECIFICATION

(11) **EP 3 255 523 B1**
(45) Date of publication and mention of the grant of the patent: **04.05.2022**
(21) Application number: 15884964.6
(22) Date of filing: 13.03.2015
(51) Int. Cl.: G06F 3/01, G06F 3/0488, G03B 17/53, H04N 5/232, G03B 13/36

(54) **ELECTRONIC DEVICE, PHOTOGRAPHING METHOD AND PHOTOGRAPHING APPARATUS**
ELEKTRONISCHE VORRICHTUNG, FOTOGRAFIEVERFAHREN UND FOTOGRAFIEVORRICHTUNG
DISPOSITIF ÉLECTRONIQUE, PROCÉDÉ DE PHOTOGRAPHIE ET APPAREIL DE PHOTOGRAPHIE

(43) Date of publication of application: 13.12.2017
(73) Proprietor: Huawei Technologies Co., Ltd., Longgang Shenzhen, Guangdong 518129 (CN)
(72) Inventor: SUN, Zengcai, Shenzhen Guangdong 518129 (CN); ZHENG, Tao, Shenzhen Guangdong 518129 (CN)
(74) Representative: Goddar, Heinz J.
(86) International application number: PCT/CN2015/074233
(87) International publication number: WO 2016/145580

(56) References cited:
- EP-A1- 1 209 553
- EP-A1- 2 302 904
- EP-A1- 2 782 328
- EP-A2- 2 613 224
- WO-A1-2015/030607
- CN-A- 102 467 344
- CN-A- 103 858 085
- CN-A- 103 914 150
- US-A1- 2005 156 876
- US-A1- 2013 194 215
- US-A1- 2014 049 677
- None

## Description

### TECHNICAL FIELD

The present invention relates to photographing technologies, and in particular, to an electronic device, a photographing method, and a photographing apparatus.

### BACKGROUND

Currently, electronic devices are increasingly popular, and the electronic devices mostly support a photographing function. This greatly increases a probability that a user takes a photograph by using an electronic device. Therefore, requirements for the photographing function of the electronic devices are increasingly high.

In the prior art, to rapidly complete focusing, an electronic device is generally set to automatic focusing. That is, the electronic device automatically selects a focus according to a preset rule, and then the electronic device initiates automatic focusing at the focus. The focus is not a focus needed by a user in some cases, and the user needs to reset a focus. If multiple focuses are automatically selected according to the preset rule, the electronic device automatically performs focusing among the multiple selected focuses unceasingly, and the user needs to reset a focus. However, when the user needs to manually set a focus, a longer time taken from setting the focus to completing focusing indicates a higher probability that the electronic device shakes or an object being photographed moves. As a result, a possibility of capturing a fuzzy photograph is higher. Therefore, how to rapidly capture a high-quality photograph is a problem to be resolved urgently.

EP 2 302 904 A1 discloses a method for controlling a photographing apparatus.It is first detected
whether a user keeps touching a focus point on the touch screen for a specific duration. If the detected result is YES, the photographing apparatus is controlled to perform an automatic focusing procedure corresponding to the focus point and then an automatic photographing procedure.

EP 2 782 328 A1 discloses an imaging apparatus.The imaging apparatus includes a display unit, a touch panel, a frame display controller, an imaging controller. The frame display controller displays a frame for focus on the display unit if an operation portion is approaching the touch panel, and moves the frame for focus in accordance with the movement of the operation portion that is approaching the touch panel. The imaging controller performs focusing on the subject in the frame for focus and then performs imaging in response to a photography instruction.

US 2014/049677 A1 discloses a photographing apparatus, which includes an image pickup section picking up an object image to acquire a picked-up image; a display section capable of showing a display based on the picked-up image; a touch panel generating a signal corresponding to a predetermined operation; and a control section detecting a direction of a slide operation on the touch panel and performing control to select one of multiple items displayed on the display section on the basis of the direction of the slide operation; and the control section sets a display position of each of the multiple items to correspond to an operation direction for selecting the item on a one to one basis and selects one of the multiple items corresponding to the direction of the slide operation in the selection.

US 2013/194215 A1 discloses an imaging apparatus, which includes an imaging part for capturing a subject image, a touch panel for acquiring a touch position input by a user, and a control part for controlling an imaging operation performed by the imaging part. The control part acquires the touch position to cause the imaging part to perform the imaging operation each time the touch position is displaced on the touch panel by a predetermined amount repeatedly during a continuous touch user input.

EP 2 613 224 A2 discloses a mobile terminal and a control method. A mobile terminal and a control method of the mobile terminal comprises a first camera; a touchpad; and a controller, if a touch input of a user is obtained through the touchpad, configured to carry out operation based on a gaze direction of the user obtained through the first camera. Operability for the mobile terminal is improved by controlling the mobile terminal based on a touch input through a touchpad and a gaze direction of the user.

WO 2015/030607 A1 discloses a gaze-controlled interface system for enabling a user to interact with an electronic visual work presented on an electronic display screen. The system has an electronic display screen configured to present the electronic visual work and an eye gaze tracker configured to sense the user' s gaze position on the display screen and generate representative gaze signal. A processor receives and processes the gaze signal to enable the user to interact with the electronic visual work based on gaze.

EP 1 209 553 A1 discloses a system for eye-gaze direction detection, in which uses an infrared light emitting diode mounted coaxially with the optical axis and in front of the imaging lens of an infrared sensitive video camera for remotely recording images of the eye of the computer operator. The infrared light enters the eye and is absorbed and then re-emitted by the retina, thereby causing a "bright eye effect" that makes the pupil brighter than the rest of the eye. It also gives rise to an even brighter small glint that is formed on the surface of the cornea. The computer includes software and hardware that acquires a video image, digitizes it into a matrix of pixels, and then analyzes the matrix to identify the location of the pupil' s center relative to the glint' s center. Using this information, the software calibrates the system to provide a high degree of accuracy in determining the user' s point of regard. When coupled with a computer screen and a graphical user interface, the system may place the cursor at the user' s point of regard and then perform the various mouse clicking actions at the location on the screen where the user fixates. This grants the individual complete control over the computer with solely their eye.

### SUMMARY

In view of this, embodiments of the present invention provide a photographing method according to independent claim 1 and an electronic device according to independent claim 4. so as to resolve a problem of how to rapidly capture a high-quality photograph. Preferred embodiments of the invention are defined in the dependent claims.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention.
FIG. 1 is a schematic structural diagram of an electronic device according to an embodiment of the present invention;
FIG. 2 is a schematic structural diagram of an electronic device according to another embodiment of the present invention;
FIG. 3 is a flowchart of a photographing method according to an embodiment of the present invention;
FIG. 4 is a flowchart of a photographing method according to another embodiment of the present invention;
FIG. 5 is a flowchart of a photographing method according to still another embodiment of the present invention;
FIG. 6 is a flowchart of a photographing method according to yet another embodiment of the present invention;
FIG. 7 is a schematic structural diagram of a photographing apparatus according to an embodiment of the present invention;
FIG. 8 is a schematic structural diagram of a photographing apparatus according to another embodiment of the present invention; and
FIG. 9 is a schematic structural diagram of a photographing apparatus according to still another embodiment of the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention.

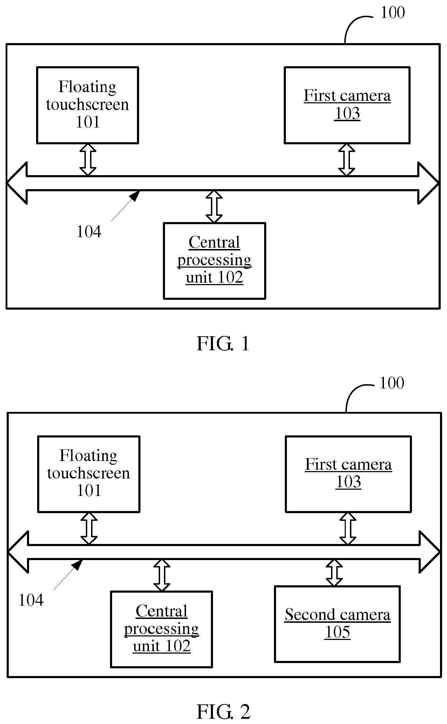

FIG. 1 is a schematic structural diagram of an electronic device according to an embodiment of the present invention.

The electronic device provided in this embodiment of the present invention may be a fixed terminal, for example, a desktop computer or a television; or may be a mobile terminal, for example, a tablet computer, a mobile phone, or a camera; or even may be a projector or a wearable device.

The electronic device 100 includes: a floating touchscreen 101, a central processing unit (Central Processing Unit, CPU) 102, a first camera 103, and a bus system 104.

A memory (not shown in the figure) may be a RAM or a ROM, or any fixed storage medium, or any removable storage medium, and is configured to store a program that may be used to execute this embodiment of the present invention or data in this embodiment of the present invention.

The CPU 102 is configured to execute the program for this embodiment of the present invention that is stored in the memory, and perform bi-directional communication with other hardware by using the bus system 104.

It should be noted that, the CPU refers to a main CPU of the electronic device. Persons skilled in the art can understand that other hardware of the electronic device also includes respective sub-CPUs. In this embodiment of the present invention, how a sub-CPU processes a signal is not described in detail, and how the sub-CPU communicates with the main CPU is also not described in detail. Instead, processing operations of the sub-CPU are replaced with corresponding hardware.

The memory and the CPU 102 may also be integrated into a physical module to which this embodiment of the present invention is applied, and a program implementing this embodiment of the present invention is stored in and runs on the physical module.

Components of the electronic device 100 are coupled together by using the bus system 104. In addition to a data bus, the bus system 104 may include a power bus, a control bus, a status signal bus, and the like. However, for clear description, various types of buses in the figure are all marked as the bus system 104.

In this embodiment of the present invention, the floating touchscreen 101 is configured to: detect whether there is a floating touch-control object on the floating touchscreen 101, and when there is a floating touch-control object on the floating touchscreen 101, send the CPU 102 a signal of at least one floating touch-control point that is generated on the floating touchscreen by the floating touch-control object, and is further configured to: detect a photographing operation on the floating touchscreen, and send the photographing operation to the CPU 102.

The floating touch-control object is a medium for controlling the electronic device. That is, a user performs touch-control on the electronic device by using the floating touch-control object, to control the electronic device. The floating touch-control object may be a finger, a touch-control stylus, a handwriting stylus, or the like.

It should be noted that, the floating touchscreen 101 is a touchscreen that supports a floating touch-control technology. Generally, there are two types of capacitive sensors: a mutual-capacitance sensor and a self-capacitance sensor, in a floating touchscreen. The mutual-capacitance sensor is configured to perform normal touch sensing, including multi-touch sensing. The self-capacitance sensor is configured to detect a floating touch-control object, for example, a finger, floating above the floating touchscreen. The self-capacitance sensor can generate a signal stronger than that of the mutual-capacitance sensor, and therefore can detect a floating touch-control object floating within a range of a sensing detection distance. The sensing detection distance refers to a maximum distance at which the floating touchscreen can detect the floating touch-control object. For example, the sensing detection distance may be 10 mm, 15 mm, or 20 mm.

It should be noted that, the at least one floating touch-control point may be a last floating touch-control point that is detected; or may be a detected floating touch-control point that is closest to the floating touchscreen; or may be multiple floating touch-control points that are detected. Which manner is used during actual implementation may be determined according to an actual situation. This is not specifically limited in this embodiment of the present invention.

The CPU 102 is configured to: determine a focus position according to the signal of the at least one floating touch-control point, and control the first camera to initiate focusing at the focus position, and is further configured to: when receiving the photographing operation sent by the floating touchscreen, control the first camera to perform photographing.

Optionally, the photographing operation is a tap operation at any position on the floating touchscreen 101 or a tap operation at a photographing button on the floating touchscreen 101. The tap operation may include a touch tap operation or a floating tap operation.

It should be noted that, the photographing operation being a tap operation at any position on the floating touchscreen 101 is applicable to the following scenario: The user can directly take a photograph by tapping at any position of a viewfinder frame, without a need to particularly tap the photographing button. In this way, the user does not need to accurately position the photographing button, thereby greatly reducing a case in which an optimal photograph cannot be captured due to shaking of the electronic device in a photographing process.

The performing photographing refers to storing an image captured by the first camera to the memory.

By means of the electronic device provided in this embodiment of the present invention, the floating touchscreen detects whether there is a floating touch-control object on the floating touchscreen, and when there is a floating touch-control object on the floating touchscreen, sends the CPU a signal of at least one floating touch-control point that is generated on the floating touchscreen by the floating touch-control object; the CPU determines a focus position according to the signal of the at least one floating touch-control point, and controls the first camera to initiate focusing at the focus position; the floating touchscreen detects a photographing operation on the floating touchscreen, and sends the photographing operation to the CPU; and when receiving the photographing operation sent by the floating touchscreen, the CPU controls the first camera to perform photographing. In this way, features of the floating touchscreen are fully utilized, so that focusing can be started immediately after a floating touch-control object is detected, thereby advancing an action of starting focusing to a moment when the floating touch-control object is detected, instead of starting focusing when a touch-control operation for the touchscreen is received. Therefore, focusing can be rapidly completed, and focusing has been successfully completed when the first camera performs photographing, achieving an objective of rapidly capturing a high-quality photograph, and thereby greatly improving photographing experience of a user.

Optionally, the first camera 103 is further configured to: calculate whether focusing succeeds, and send a focusing success result to the CPU 102. The CPU 102 is configured to: when receiving the focusing success result sent by the first camera 103 and receiving the photographing operation sent by the floating touchscreen 101, control the first camera 103 to perform photographing. In this way, photographing is performed only after it is determined that focusing succeeds, so that the camera can capture a high-quality photograph, thereby greatly improving photographing experience of a user.

It is assumed that the focusing success result sent by the first camera being received is a condition 1, and the photographing operation sent by the floating touchscreen being received is a condition 2. The controlling the first camera to perform photographing when the focusing success result sent by the first camera is received and the photographing operation sent by the floating touchscreen is received means that the first camera is controlled to perform photographing only when both the condition 1 and the condition 2 are satisfied.

It should be noted that, how to determine whether focusing succeeds belongs to the prior art, and details are not described in this embodiment of the present invention.

Optionally, to avoid frequently initiating focusing, the CPU 102 is further configured to: calculate a position variation value between the currently determined focus position and a previously determined focus position, and when the position variation value is greater than a preset position threshold, control the first camera 103 to initiate focusing at the currently determined focus position, and when the position variation value is less than the preset position threshold, ignore the currently determined focus position, and skip controlling the first camera to initiate focusing. In this way, a problem of frequently initiating focusing is effectively avoided, and energy consumption due to frequent initiation of focusing is greatly reduced.

Optionally, the floating touchscreen 101 is configured to: detect whether there is a floating touch-control object on the floating touchscreen 101, and when there is a floating touch-control object on the floating touchscreen 101, and a residence time of the floating touch-control object on the floating touchscreen 101 is greater than a preset time threshold, send the CPU 102 a signal of at least one floating touch-control point that is generated on the floating touchscreen 101 by the floating touch-control object. In this way, an operation that a user intends to set a focus can be effectively identified, avoiding incorrectly identifying another operation of the user as a focus setting operation.

FIG. 2 is a schematic structural diagram of an electronic device according to another embodiment of the present invention. This embodiment of the present invention is implemented based on the embodiment shown in FIG. 1, and only parts different from those shown in FIG. 1 are described in detail herein. For other parts, refer to related descriptions in FIG. 1, and details are not described herein. As shown in FIG. 2, the electronic device 100 further includes a second camera 105. The second camera 105 is configured to detect a gaze position at which eyes of a user gaze on the floating touchscreen 101. The CPU is configured to determine the focus position according to the signal of the at least one floating touch-control point and the gaze position, and control the first camera 103 to initiate focusing at the focus position.

It should be noted that, the first camera may be a rear-facing camera, and the second camera may be a front-facing camera.

There are multiple methods for determining the focus position according to the signal of the at least one floating touch-control point and the gaze position.

Optionally, when the signal of the at least one floating touch-control point includes one floating touch-control point, the floating touch-control point may be used as the focus position or the gaze position may be used as the focus position.

Optionally, when the signal of the at least one floating touch-control point includes positions of multiple floating touch-control points, a touch-control trajectory may be determined according to the positions of the multiple floating touch-control points, and a point that is on the touch-control trajectory and that is closest to the gaze position is selected as the focus position.

Optionally, when the signal of the at least one floating touch-control point includes positions of multiple floating touch-control points, and the gaze position is on an extension line of a trajectory formed by the positions of the multiple floating touch-control points, the CPU is configured to determine the gaze position as the focus position. For example, a touch-control trajectory may be determined according to the positions of the multiple floating touch-control points, and then an extension line of the touch-control trajectory is determined. Subsequently, when the gaze position is on the extension line of touch-control trajectory, the first camera is controlled to determine the gaze position as a focus and initiate focusing. That is, the focus position is determined in advance according to the touch-control trajectory of the user and the gaze position of the user, and focusing is performed in advance, so that a time at which focusing is performed can be further advanced, and focusing can be completed more rapidly.

The electronic device provided in this embodiment of the present invention predicts the focus position by combining the signal of the at least one floating touch-control point and the gaze position that is detected by the second camera and initiates focusing in advance, so that focusing is rapidly completed, thereby achieving an objective of rapidly capturing a high-quality photograph.

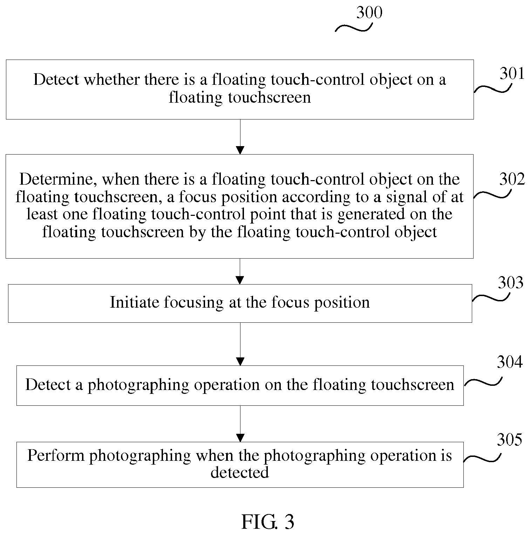

The hardware of the electronic device in this embodiment of the present invention may be used to perform processes of photographing methods shown in FIG. 3 to FIG. 6. For specific operation processes, refer to descriptions of method embodiments, and details are not described herein.

FIG. 3 is a flowchart of a photographing method according to an embodiment of the present invention. The method is applied to an electronic device, and the electronic device includes a floating touchscreen.

The electronic device in the photographing method provided in this embodiment of the present invention may be a fixed terminal, for example, a desktop computer or a television; or may be a mobile terminal, for example, a tablet computer, a mobile phone, or a camera; or even may be a projector or a wearable device.

It should be noted that, the method is a method that is performed after the electronic device enables a photographing function.

The method 300 includes the following steps.

Step 301: Detect whether there is a floating touch-control object on the floating touchscreen.

Step 302: Determine, when there is a floating touch-control object on the floating touchscreen, a focus position according to a signal of at least one floating touch-control point that is generated on the floating touchscreen by the floating touch-control object.

It should be noted that, step 302 may specifically include: when there is a floating touch-control object on the floating touchscreen, and a residence time of the floating touch-control object on the floating touchscreen is greater than a preset time threshold, determining the focus position according to a signal of at least one floating touch-control point that is generated on the floating touchscreen by the floating touch-control object. In this way, an operation that a user intends to set a focus can be effectively identified, avoiding incorrectly identifying another operation of the user as a focus setting operation.

Step 303: Initiate focusing at the focus position.

Step 304: Detect a photographing operation on the floating touchscreen.

The photographing operation is a tap operation at any position on the floating touchscreen or a tap operation at a photographing button on the floating touchscreen.

It should be noted that, the photographing operation being a tap operation at any position on the floating touchscreen is applicable to the following scenario: The user can directly take a photograph by tapping at any position of a viewfinder frame, without a need to particularly tap the photographing button. In this way, the user does not need to accurately position the photographing button, thereby greatly reducing a case in which an optimal photograph cannot be captured due to shaking of the electronic device in a photographing process.

Step 305: Perform photographing when the photographing operation is detected.

The performing photographing refers to storing a captured image to a memory.

According to the photographing method provided in this embodiment of the present invention, whether there is a floating touch-control object on a floating touchscreen is detected, and when there is a floating touch-control object on the floating touchscreen, a focus position is determined according to a signal of at least one floating touch-control point, and focusing is initiated at the focus position; a photographing operation on the floating touchscreen is detected, and photographing is performed when the photographing operation sent by the floating touchscreen is received. In this way, features of the floating touchscreen are fully utilized, so that focusing can be started immediately after a floating touch-control object is detected, thereby advancing an action of starting focusing to a moment when the floating touch-control object is detected, instead of starting focusing when a touch-control operation for the touchscreen is received. Therefore, focusing can be rapidly completed, and focusing has been successfully completed when a first camera performs photographing, achieving an objective of rapidly capturing a high-quality photograph, and thereby greatly improving photographing experience of a user.

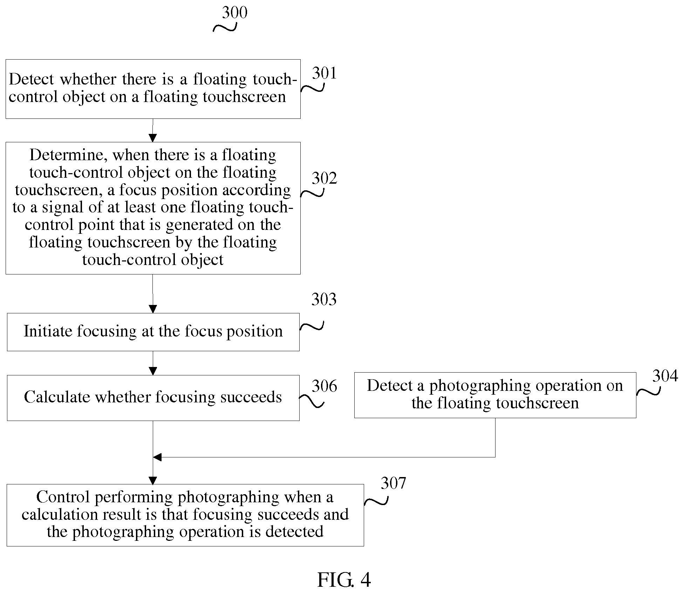

FIG. 4 is a flowchart of a photographing method according to another embodiment of the present invention. This embodiment of the present invention is implemented based on the embodiment shown in FIG. 3, and only parts different from those shown in FIG. 3 are described in detail herein. For other parts, refer to related descriptions in FIG. 3, and details are not described herein. As shown in FIG. 4, after the initiating focusing, the method 300 further includes the following steps.

Step 306: Calculate whether focusing succeeds.

It should be noted that, how to determine whether focusing succeeds belongs to the prior art, and details are not described in this embodiment of the present invention.

Step 305 is replaced with step 307: Control performing photographing when a calculation result is that focusing succeeds and the photographing operation is detected.

It is assumed that the calculation result being that focusing succeeds is a condition 3, and the photographing operation being detected is a condition 4. The controlling performing photographing when a calculation result is that focusing succeeds and the photographing operation is detected means that the first camera is controlled to perform photographing only when both the condition 3 and the condition 4 are satisfied.

The performing photographing refers to storing a captured image to a memory.

According to the photographing method provided in this embodiment of the present invention, after focusing is initiated, it is calculated whether focusing succeeds, and photographing is performed only when focusing succeeds and a photographing operation is detected. In this way, photographing is performed only after it is determined that focusing succeeds, so that the camera can capture a high-quality photograph, thereby greatly improving photographing experience of a user.

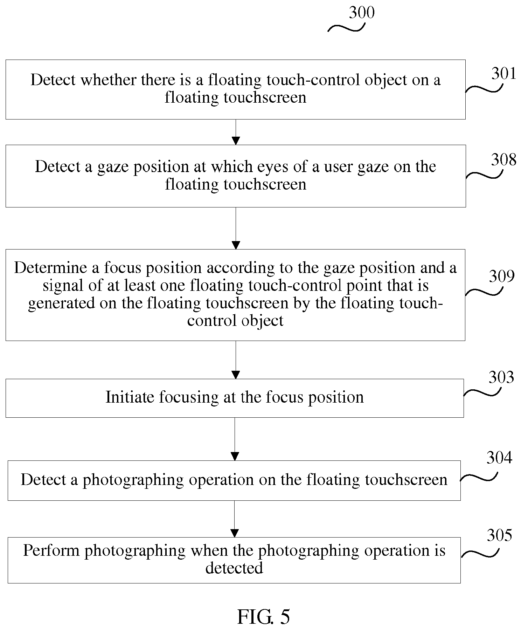

FIG. 5 is a flowchart of a photographing method according to still another embodiment of the present invention. This embodiment of the present invention is implemented based on the embodiment shown in FIG. 3, and only parts different from those shown in FIG. 3 are described in detail herein. For other parts, refer to related descriptions in FIG. 3, and details are not described herein. As shown in FIG. 5, the method 300 further includes the following steps.

Step 308: Detect a gaze position at which eyes of a user gaze on the floating touchscreen.

Correspondingly, step 302 is replaced with step 309: Determine the focus position according to the gaze position and the signal of the at least one floating touch-control point that is generated on the floating touchscreen by the floating touch-control object.

There may be multiple methods for determining the focus position according to the gaze position and the signal of the at least one floating touch-control point that is generated on the floating touchscreen by the floating touch-control object.

Optionally, when the signal of the at least one floating touch-control point includes one floating touch-control point, the floating touch-control point may be used as the focus position or the gaze position may be used as the focus position.

Optionally, when the signal of the at least one floating touch-control point includes positions of multiple floating touch-control points, a touch-control trajectory may be determined according to the positions of the multiple floating touch-control points, and a point that is on the touch-control trajectory and that is closest to the gaze position is selected as the focus position.

Optionally, when the signal of the at least one floating touch-control point includes positions of multiple floating touch-control points, and the gaze position is on an extension line of a trajectory formed by the positions of the multiple floating touch-control points, the gaze position is determined as the focus position. For example, a touch-control trajectory may be determined according to the positions of the multiple floating touch-control points, and then an extension line of the touch-control trajectory is determined. Subsequently, when the gaze position is on the extension line of touch-control trajectory, the first camera is controlled to determine the gaze position as a focus and initiate focusing. That is, the focus position is determined in advance according to the touch-control trajectory of the user and the gaze position of the user, and focusing is performed in advance, so that a time at which focusing is performed can be further advanced, and an objective of focusing can be achieved more rapidly.

According to the photographing method provided in this embodiment of the present invention, the focus position is predicted by combining the signal of the at least one floating touch-control point and the gaze position that is detected by a second camera, and focusing is initiated in advance, so that focusing is rapidly completed, thereby achieving an objective of rapidly capturing a high-quality photograph.

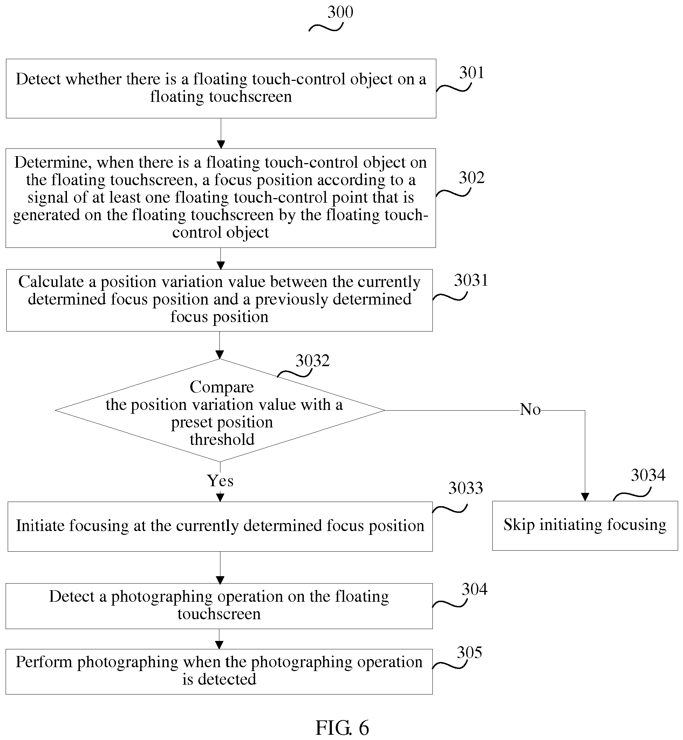

FIG. 6 is a flowchart of a photographing method according to yet another embodiment of the present invention. This embodiment of the present invention is implemented based on the embodiment shown in FIG. 3, and only parts different from those shown in FIG. 3 are described in detail herein. For other parts, refer to related descriptions in FIG. 3, and details are not described herein. As shown in FIG. 6, step 303 may include:

Step 3031: Calculate a position variation value between the currently determined focus position and a previously determined focus position.

Step 3032: Compare the position variation value with a preset position threshold.

Step 3033: When the position variation value is greater than the preset position threshold, initiate focusing at the currently determined focus position.

Step 3034: When the position variation value is greater than the preset position threshold, skip initiating focusing.

According to the photographing method provided in this embodiment of the present invention, a currently determined focus position is compared with a previously determined focus position, and when a position variation is greater than a preset position threshold, focusing is initiated at the currently determined focus position, and when the position variation is less than the preset position threshold, the currently determined focus position is ignored, and focusing is not initiated. In this way, a problem of frequently initiating focusing is effectively avoided, and energy consumption due to frequent initiation of focusing is greatly reduced.

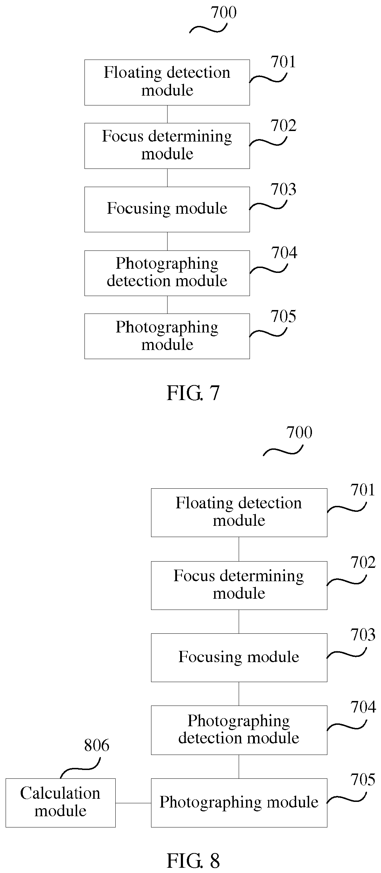

FIG. 7 is a schematic structural diagram of a photographing apparatus according to an embodiment of the present invention. The apparatus is applied to an electronic device, and the electronic device includes a floating touchscreen. The apparatus 700 includes a floating detection module 701, a focus determining module 702, a focusing module 703, a photographing detection module 704, and a photographing module 705.

The floating detection module 701 is configured to detect whether there is a floating touch-control object on the floating touchscreen.

The focus determining module 702 is configured to: when the floating detection module 701 detects that there is a floating touch-control object on the floating touchscreen, determine a focus position according to a signal of at least one floating touch-control point that is generated on the floating touchscreen by the floating touch-control object.

It should be noted that, the focus determining module 702 is specifically configured to: when there is a floating touch-control object on the floating touchscreen, and a residence time of the floating touch-control object on the floating touchscreen is greater than a preset time threshold, determine the focus position according to the signal of the at least one floating touch-control point that is generated on the floating touchscreen by the floating touch-control object. In this way, an operation that a user intends to set a focus can be effectively identified, avoiding incorrectly identifying another operation of the user as a focus setting operation.

The focusing module 703 is configured to initiate focusing at the focus position determined by the focus determining module 702.

Optionally, the focusing module is specifically configured to: compare the currently determined focus position with a previously determined focus position, and when a variation value between the two positions is greater than a preset position threshold, use the currently determined focus position as a focus and initiate focusing.

The photographing detection module 704 is configured to detect a photographing operation on the floating touchscreen.

The photographing operation is a tap operation at any position on the floating touchscreen or a tap operation at a photographing button on the floating touchscreen.

It should be noted that, the photographing operation being a tap operation at any position on the floating touchscreen is applicable to the following scenario: The user can directly take a photograph by tapping at any position of a viewfinder frame, without a need to particularly tap the photographing button. In this way, the user does not need to accurately position the photographing button, thereby greatly reducing a case in which an optimal photograph cannot be captured due to shaking of the electronic device in a photographing process.

The photographing module 705 is configured to perform photographing when the photographing detection module 704 detects the photographing operation.

According to the photographing apparatus provided in this embodiment of the present invention, whether there is a floating touch-control object on the floating touchscreen is detected, and when there is a floating touch-control object on the floating touchscreen, a focus position is determined according to a signal of at least one floating touch-control point, and focusing is initiated at the focus position; a photographing operation on the floating touchscreen is detected, and photographing is performed when the photographing operation sent by the floating touchscreen is received. In this way, features of the floating touchscreen are fully utilized, so that focusing can be started immediately after a floating touch-control object is detected, thereby advancing an action of starting focusing to a moment when the floating touch-control object is detected, instead of starting focusing when a touch-control operation for the touchscreen is received. Therefore, focusing can be rapidly completed, and focusing has been successfully completed when the first camera performs photographing, achieving an objective of rapidly capturing a high-quality photograph, and thereby greatly improving photographing experience of a user.

FIG. 8 is a schematic structural diagram of a photographing apparatus according to another embodiment of the present invention. This embodiment of the present invention is implemented based on the embodiment shown in FIG. 7, and only parts different from those shown in FIG. 7 are described in detail herein. For other parts, refer to related descriptions in FIG. 7, and details are not described herein. As shown in FIG. 8, the apparatus further includes:
a calculation module 806, configured to calculate whether focusing succeeds; and
the photographing module 705 is specifically configured to control performing photographing when a calculation result received from the calculation module 806 is that focusing succeeds and the photographing detection module 704 detects the photographing operation.

According to the photographing apparatus provided in this embodiment of the present invention, after focusing is initiated, it is calculated whether focusing succeeds, and photographing is performed only when focusing succeeds and a photographing operation is detected. In this way, photographing is performed only after it is determined that focusing succeeds, so that the camera can capture a high-quality photograph, thereby greatly improving photographing experience of a user.

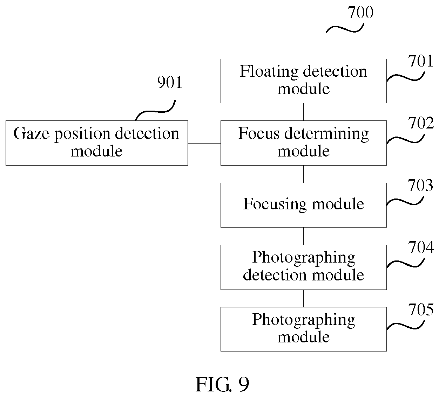

FIG. 9 is a schematic structural diagram of a photographing apparatus according to still another embodiment of the present invention. This embodiment of the present invention is implemented based on the embodiment shown in FIG. 7, and only parts different from those shown in FIG. 7 are described in detail herein. For other parts, refer to related descriptions in FIG. 7, and details are not described herein. As shown in FIG. 9, the apparatus further includes:
a gaze position detection module 901, configured to detect a gaze position at which eyes of a user gaze on the floating touchscreen.

It should be noted that, there may be multiple methods for determining the focus position according to the gaze position and the signal of the at least one floating touch-control point that is generated on the floating touchscreen by the floating touch-control object. For the methods, refer to descriptions in the method embodiment section, and details are not described herein.

The focus determining module 702 is specifically configured to determine the focus position according to the gaze position that is detected by the gaze position detection module 901 and the signal of the at least one floating touch-control point that is generated on the floating touchscreen by the floating touch-control object that is detected by the floating detection module 701.

Optionally, the focus determining module is specifically configured to: when the signal of the at least one floating touch-control point includes positions of multiple floating touch-control points, and the positions of the multiple floating touch-control points include the gaze position, determine the gaze position as the focus position.

According to the photographing apparatus provided in this embodiment of the present invention, the focus position is predicted by combining the signal of the at least one floating touch-control point and the gaze position that is detected by the gaze position detection module 901, and focusing is initiated in advance, so that focusing is rapidly completed, thereby achieving an objective of rapidly capturing a high-quality photograph.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A photographing method, applied to an electronic device, wherein the electronic device comprises a floating touchscreen, a first camera and a second camera, wherein the floating touchscreen is a touchscreen that supports a floating touch-control technology, and the method comprises:
detecting (Step 301), by the electronic device, whether there is a floating touch-control object on the floating touchscreen, wherein the floating touch-control object comprises one of a finger, a touch-control stylus or a handwriting stylus;
detecting (Step 308), by the electronic device, a gaze position at which the eyes of a user gaze on the floating touchscreen;
determining (Step 302, 309), by the electronic device, a current focus position according to the gaze position and a signal of at least one floating touch-control point that is generated on the floating touchscreen by the floating touch-control object;
**characterized by**,
comparing (Step 3031,3032), by the electronic device, the current focus position with a previously determined focus position;
initiating focusing (Step 3033), by the electronic device, at the current focus position only when a position variation value between the current focus position and the previously determined focus position is greater than a preset threshold; and,
detecting a tap operation on the floating touchscreen;
performing (Step 305, 307), by the electronic device, photographing when a tap operation on the floating touchscreen is detected.

2. The method according to claim 1, wherein after the step of initiating focusing (Step 3033), the method further comprises:
calculating (Step 306) whether focusing succeeds; and
controlling performing (Step 307) photographing when a calculation result is that focusing succeeds and the tap operation is detected.

3. The method according to any one of claims 1 to 2, wherein the tap operation is a tap operation at any position on the floating touchscreen or a tap operation at a photographing button on the floating touchscreen.

4. An electronic device (100), wherein the electronic device (100) comprises a floating touchscreen (101), a first camera (103) and a second camera (105), wherein the floating touchscreen (101) is a touchscreen that supports a floating touch-control technology, and wherein the electronic device (100) further comprises:
a floating detection module (701), configured to detect whether there is a floating touch-control object on the floating touchscreen (101), wherein the floating touch-control object comprises one of a finger, a touch-control stylus or a handwriting stylus;
a gaze position detection module (901), configured to detect a gaze position at which the eyes of a user gaze on the floating touchscreen (101);
a focus determining module (702), configured to: determine a current focus position according to the gaze position and a signal of at least one floating touch-control point that is generated on the floating touchscreen (101) by the floating touch-control object;
**characterized by**,
a focusing module (703), configured to compare the current focus position with a previously determined focus position and initiate focusing at the current focus position only when a position variation value between the current focus position and the previously determined focus position is greater than a preset threshold;
a photographing detection module (704), configured to detect a tap operation on the floating touchscreen (101); and
a photographing module (705), configured to perform photographing when the photographing detection module (704) detects the tap operation.

5. The electronic device (100) according to claim 4, wherein the electronic device (100) further comprises:
a calculation module (806), configured to calculate whether focusing succeeds; and
the photographing module (705) is configured to control performing photographing when a calculation result received from the calculation module (806) is that focusing succeeds and the photographing detection module (704) detects the tap operation.

6. The electronic device (100) according to any one of claims 4 to 5, wherein the tap operation is a tap operation at any position on the floating touchscreen (101) or a tap operation at a photographing button on the floating touchscreen (101).

## Patentansprüche

1. Fotografierverfahren, das auf eine elektronische Vorrichtung angewendet wird, wobei die elektronische Vorrichtung einen Floating-Berührungsbildschirm, eine erste Kamera und eine zweite Kamera umfasst, wobei der Floating-Berührungsbildschirm ein Berührungsbildschirm ist, der eine Floating-Berührungsteuerungstechnologie unterstützt, und das Verfahren Folgendes umfasst:
Erfassen (Schritt 301), durch die elektronische Vorrichtung, ob ein Floating-Berührungssteuerungsobjekt auf dem Floating-Berührungsbildschirm vorhanden ist,
wobei das Floating-Berührungssteuerungsobjekt einen Finger, einen Berührungssteuerungseingabestift oder einen Handschrifteingabestift umfasst;
Erfassen (Schritt 308), durch die elektronische Vorrichtung, einer Blickposition, in der die Augen eines Benutzers auf den Floating-Berührungsbildschirm blicken;
Bestimmen (Schritt 302, 309), durch die elektronische Vorrichtung, einer aktuellen Fokusposition gemäß der Blickposition und eines Signals wenigstens eines Floating-Berührungssteuerungspunkts, der auf dem Floating-Berührungsbildschirm durch das Floating-Berührungssteuerungsobjekt erzeugt wird;
**gekennzeichnet durch** Folgendes
Vergleichen (Schritt 3031, 3032), durch die elektronische Vorrichtung, der aktuellen Fokusposition mit einer zuvor bestimmten Fokusposition;
Einleiten eines Fokussierens (Schritt 3033), durch die elektronische Vorrichtung, nur an der aktuellen Fokusposition, wenn ein Positionsvariationswert zwischen der aktuellen Fokusposition und der zuvor bestimmten Fokusposition größer als eine voreingestellte Schwelle ist; und
Erfassen eines Tippvorgangs auf dem Floating-Berührungsbildschirm;
Durchführen (Schritt 305, 307), durch die elektronische Vorrichtung, des Fotografierens, wenn ein Tippvorgang auf dem Floating-Berührungsbildschirm erfasst wird.

2. Verfahren nach Anspruch 1, wobei das Verfahren nach dem Schritt des Einleitens des Fokussierens (Schritt 3033) ferner Folgendes umfasst:
Berechnen (Schritt 306), ob das Fokussieren erfolgreich ist; und
Steuern des Durchführens (Schritt 307) des Fotografierens, wenn ein Berechnungsergebnis ergibt, dass das Fokussieren erfolgreich ist und der Tippvorgang erfasst wird.

3. Verfahren nach einem der Ansprüche 1 bis 2, wobei der Tippvorgang ein Tippvorgang an einer beliebigen Position auf dem Floating-Berührungsbildschirm oder ein Tippvorgang an einer Fotografiertaste auf dem Floating-Berührungsbildschirm ist.

4. Elektronische Vorrichtung (100), wobei die elektronische Vorrichtung (100) einen Floating-Berührungsbildschirm (101), eine erste Kamera (103) und eine zweite Kamera (105) umfasst, wobei der Floating-Berührungsbildschirm (101) ein Berührungsbildschirm ist, der eine Floating-Berührungsteuerungstechnologie unterstützt, und wobei die elektronische Vorrichtung (100) ferner Folgendes umfasst:
ein Floating-Erfassungsmodul (701), das konfiguriert ist, um zu erfassen, ob ein Floating-Berührungssteuerungsobjekt auf dem Floating-Berührungsbildschirm (101) vorhanden ist, wobei das Floating-Berührungssteuerungsobjekt einen Finger, einen Berührungssteuerungseingabestift oder einen Handschrifteingabestift umfasst;
ein Blickpositionserfassungsmodul (901), das konfiguriert ist, um eine Blickposition zu erfassen, in der die Augen eines Benutzers auf den Floating-Berührungsbildschirm (101) blicken;
ein Fokusbestimmungsmodul (702), das für Folgendes konfiguriert ist: Bestimmen einer aktuellen Fokusposition gemäß der Blickposition und einem Signal wenigstens eines Floating-Berührungssteuerungspunkts, der auf dem Floating-Berührungsbildschirm (101) durch das Floating-Berührungssteuerungsobjekt erzeugt wird;
**gekennzeichnet durch** Folgendes
ein Fokussierungsmodul (703), das konfiguriert ist, um die aktuelle Fokusposition mit einer zuvor bestimmten Fokusposition zu vergleichen und das Fokussieren an der aktuellen Fokusposition nur dann einzuleiten, wenn ein Positionsänderungswert zwischen der aktuellen Fokusposition und der zuvor bestimmten Fokusposition größer als eine voreingestellte Schwelle ist;
ein Fotografiererfassungsmodul (704), das konfiguriert ist, um einen Tippvorgang auf dem Floating-Berührungsbildschirm (101) zu erfassen; und
ein Fotografiermodul (705), das konfiguriert ist, um das Fotografieren durchzuführen, wenn das Fotografiererfassungsmodul (704) den Tippvorgang erfasst.

5. Elektronische Vorrichtung (100) nach Anspruch 4, wobei die elektronische Vorrichtung (100) ferner Folgendes umfasst:
ein Berechnungsmodul (806), das konfiguriert ist, um zu berechnen, ob das Fokussieren erfolgreich ist; und
das Fotografiermodul (705) konfiguriert ist, um das Durchführen eines Fotografierens zu steuern, wenn ein Berechnungsergebnis, das von dem Berechnungsmodul (806) empfangen wird, ergibt, dass das Fokussieren erfolgreich ist und das Fotografiererfassungsmodul (704) den Tippvorgang erfasst.

6. Elektronische Vorrichtung (100) nach einem der Ansprüche 4 bis 5, wobei der Tippvorgang ein Tippvorgang an einer beliebigen Position auf dem Floating-Berührungsbildschirm (101) oder ein Tippvorgang an einer Fotografiertaste auf dem Floating-Berührungsbildschirm (101) ist.

## Revendications

1. Procédé de photographie, appliqué à un dispositif électronique, le dispositif électronique comprenant un écran tactile flottant, un premier appareil de prise de vues et un second appareil de prise de vues, l'écran tactile flottant étant un écran tactile qui prend en charge une technologie de commande tactile flottante, et le procédé comprenant :
la détection (étape 301), par le dispositif électronique, du fait de savoir s'il y a un objet de commande tactile flottant sur l'écran tactile flottant, l'objet de commande tactile flottant comprenant soit un doigt, soit un stylet de commande tactile, soit un stylet d'écriture manuscrite ;
la détection (étape 308), par le dispositif électronique, d'une position du regard au niveau de laquelle les yeux d'un utilisateur regardent sur l'écran tactile flottant ;
la détermination (étapes 302, 309), par le dispositif électronique, d'une position de mise au point actuelle selon la position du regard et d'un signal d'au moins un point de commande tactile flottant qui est généré sur l'écran tactile flottant par l'objet de commande tactile flottant ;
**caractérisé par**,
la comparaison (étape 3031, 3032), par le dispositif électronique, de la position de mise au point actuelle avec une position de mise au point précédemment déterminée ;
le lancement de la mise au point (étape 3033), par le dispositif électronique, au niveau de la position de mise au point actuelle uniquement lorsqu'une valeur de variation de position entre la position de mise au point actuelle et la position de mise au point précédemment déterminée est supérieure à un seuil prédéfini ; et,
la détection d'une opération de tapotement sur l'écran tactile flottant ;
la réalisation (étapes 305, 307), par le dispositif électronique, de la photographie lorsqu'une opération de tapotement sur l'écran tactile flottant est détectée.

2. Procédé selon la revendication 1, après l'étape de lancement de la mise au point (étape 3033), le procédé comprenant en outre :
le calcul (étape 306) du fait de savoir si la mise au point réussit ; et
la commande de la réalisation (étape 307) de la photographie lorsqu'un résultat de calcul est tel que la mise au point réussit et que l'opération de tapotement est détectée.

3. Procédé selon l'une quelconque des revendications 1 à 2, l'opération de tapotement étant une opération de tapotement au niveau d'une position quelconque sur l'écran tactile flottant ou une opération de tapotement au niveau d'un bouton de photographie sur l'écran tactile flottant.

4. Dispositif électronique (100), le dispositif électronique (100) comprenant un écran tactile flottant (101), un premier appareil de prise de vues (103) et un second appareil de prise de vues (105), l'écran tactile flottant (101) étant un écran tactile qui prend en charge une technologie de commande tactile, et le dispositif électronique (100) comprenant en outre :
un module de détection flottant (701), configuré pour détecter s'il y a un objet de commande tactile flottant sur l'écran tactile flottant (101), l'objet de commande tactile flottant comprenant soit un doigt, soit un stylet à commande tactile, soit un stylet d'écriture manuscrite ;
un module de détection de position du regard (901), configuré pour détecter une position du regard au niveau de laquelle les yeux d'un utilisateur regardent sur l'écran tactile flottant (101) ;
un module de détermination de mise au point (702), configuré pour : déterminer une position de mise au point actuelle selon la position du regard et d'un signal d'au moins un point de commande tactile flottant qui est généré sur l'écran tactile flottant (101) par l'objet de commande tactile flottant ;
**caractérisé par**,
un module de mise au point (703), configuré pour comparer la position de mise au point actuelle avec une position de mise au point précédemment déterminée et le lancement de la mise au point au niveau de la position de mise au point actuelle uniquement lorsqu'une valeur de variation de position entre la position de mise au point actuelle et la position de mise au point précédemment déterminée est supérieure à un seuil prédéfini ;
un module de détection de photographie (704), configuré pour détecter une opération de tapotement sur l'écran tactile flottant (101) ; et
un module de photographie (705), configuré pour réaliser la photographie lorsque le module de détection de photographie (704) détecte l'opération de tapotement.

5. Dispositif électronique (100) selon la revendication 4, le dispositif électronique (100) comprenant en outre :
un module de calcul (806), configuré pour calculer si la mise au point réussit ; et
le module de photographie (705) est configuré pour commander la réalisation de la photographie lorsqu'un résultat de calcul reçu à partir du module de calcul (806) est tel que la mise au point réussit et que le module de détection de photographie (704) détecte l'opération de tapotement.

6. Dispositif électronique (100) selon l'une quelconque des revendications 4 à 5, l'opération de tapotement étant une opération de tapotement au niveau d'une position quelconque sur l'écran tactile flottant (101) ou une opération de tapotement au niveau d'un bouton de photographie sur l'écran tactile flottant (101).
